# EUROPEAN PATENT SPECIFICATION

(11) **EP 1 231 041 B1**
(45) Date of publication and mention of the grant of the patent: **01.09.2004**
(21) Application number: 02002624.1
(22) Date of filing: 05.02.2002
(51) Int. Cl.: B29C 45/27

(54) **Injection nozzle for moulding plastic materials**
Spritzgiessdüse zum Spritzgiessen von Kunstoffmaterialien
Buse d'injection pour le moulage des matériaux plastiques

(30) Priority: 07.02.2001 IT TO20010017 U
(43) Date of publication of application: 14.08.2002
(73) Proprietor: Thermoplay S.p.A., 11026 Pont Saint Martin (Aosta) (IT)
(72) Inventor: Enrietti, Piero, 11020 Donnas (Aosta) (IT)
(74) Representative: Fioravanti, Corrado

(56) References cited:
- WO-A-00/48814
- FR-A- 2 620 953
- US-A- 4 702 686
- US-A- 5 334 006
- US-A- 5 736 171

## Description

The present invention relates to an injection nozzle for moulding plastics materials, in particular plastics materials containing fibreglass.

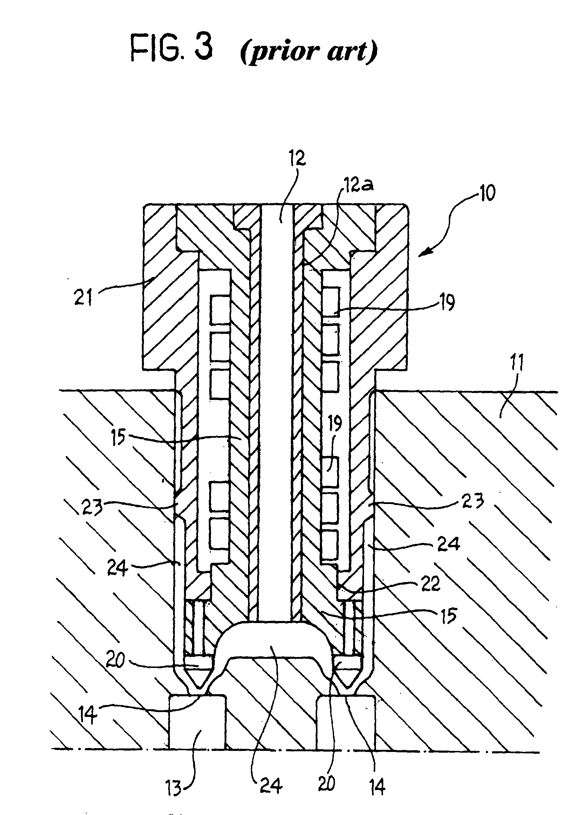

In order better to understand the art and problems pertaining thereto, a description is provided of a conventional vertical, multi-jet injection nozzle, illustrated in Figure 3 of the appended drawings.

With reference to Figure 3, an injection nozzle 10 is fitted in a mould 11 for plastics materials. The nozzle 10 has an injection duct 12 for injecting the molten plastics material into a moulding cavity 13 through injection holes 14. The injection duct 12 is constituted by a steel tube 12a housed in an axial position inside a substantially cylindrical element 15, generally made of a copper-beryllium alloy.

A resistor 19 is wound round the element 15 in order to heat the plastics material flowing through the injection duct 12 and to maintain the portions of the nozzle 10 in contact with the flow of plastics material hot enough to prevent it from solidifying.

The element 15 is fitted into a substantially cylindrical steel body 21; the lower end of the element 15 protrudes from the lower end of the body 21 through a central aperture 22.

Downwardly tapering conical tips 20 are fixed to the said lower end portion of the element 15, to the side of the injection duct 12, and usually screwed directly onto the element 15 so as to form a part of the end portions of the injection channel 12, at the site of the injection holes 14.

As can be seen from Figure 3, the tips 20 lie within a chamber 24 formed between the lower portion of the injector nozzle 10 and the walls of the mould 11 and closed at the top by a sealing edge 23 of the body 21. When the molten plastics material is forced under pressure through the injection duct 12 to fill the injection chamber 24, the tips 20 convey the flow of material towards the injection holes 14, channelling the material into the moulding cavity 13.

Nozzles of the type described above have a disadvantage in that they are subject to considerable wear, this being especially high when such nozzles are used to inject plastics material containing abrasive substances such as glass fibres or minerals. In particular, the high-pressure plastics material erodes the copper-beryllium of the element 15 which is exposed to the flow of material into the chamber 24, thereby compromising the coupling between the tips 20 and the respective seats into which they are screwed and making it necessary to replace the worn copper-beryllium element. Any such operation is particularly unwelcome since it requires delicate work that can only be carried out by hand. In addition, any instability of the tips can have a deleterious effect on moulding quality.

Another disadvantage of the prior art relates to the considerable electrical power required to heat the nozzle 10, especially the lower portion thereof and the tips 20.

The heat generated by the resistor 19 is transmitted to the lower portions of the nozzle and to the chamber 24 by conduction thanks to the copper-beryllium element 15, exploiting the good thermal conductivity of this material to ensure that the plastics material is injected through the holes 14 at the correct temperature.

US-A-5 736 171 discloses an injection nozzle for moulding plastics materials which comprises a cylindrical steel core, an injection duct, a steel body which is a cup open at the bottom, with an internal surface which is congruent with the external lateral surface of the core and surfaces which form end portions of the injection channel near at least one injection duct, in accordance with the preamble of claim 1.

US-A-5 334 006 discloses a hot sprue bushing for use in plastic injection moulding processes, wherein seats are formed in the core portion of a steel core for housing resistor means extending to a point close to the bottom end of the core. WO-A-00/48814 shows a similar arrangement.

One object of the invention is to provide an improved injection nozzle able to overcome the problems described above, while at the same time being simple and economical to manufacture, with fewer components. Another object of the invention is to improve the heating and injection conditions while consuming less energy.

These object are achieved, according to the invention, by providing an injection nozzle having the characteristics claimed in Claim 1. Others embodiments of the invention are defined in the dependent claims.

The characteristics and the advantages of the invention will become apparent from the detailed description of one embodiment with reference to the appended drawings, provided purely by way of non-limitative example, in which:
Figure 1 is a sectioned view of an injection nozzle for a vertical multi-jet mould according to the present invention;
Figure 2 is a sectioned view of an injection nozzle for a horizontal multi-jet mould according to the present invention, and
Figure 3 is a sectioned view of an injection nozzle for a vertical multi-jet mould according to the prior art.

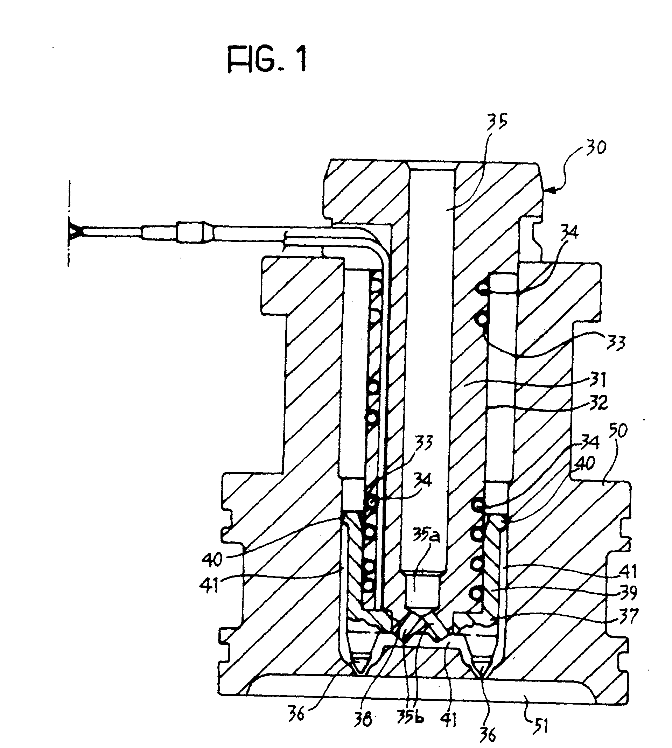

With reference to Figure 1, an injection nozzle for moulding plastics materials according to a first embodiment of the invention is generally indicated 30, for application to a mould 50 with multiple vertical jets and one or more moulding cavities 51.

A steel core 31, formed in one piece, is essentially cylindrical with a concave seat 33 formed in the outer lateral surface 32 thereof for housing a resistor element 34. This resistor 34 is housed in the seat 33 down to the point close to the lower end portion of the steel core 31, thereby establishing an optimum thermal contact with the latter.

A rectilinear injection duct 35 is formed directly in the steel core 31; this injection duct 35 having a lower portion 35a which is also rectilinear and terminates in a plurality of branches 35b, each inclined towards a corresponding nozzle tip portion 36, arranged beneath and to the side of the axis of the nozzle. The tip portions 36 are formed in one piece with the lower portion of an essentially cup-shape body 37 which has a hole in the bottom and will henceforth be referred to as a cup.

The cup 37 has a central aperture 38, a cylindrical lateral surface 39 and an upper sealing rim 40 which projects radially. The said cup is rigidly secured to the core 31 since it is fixed thereto by radial interference; in addition, the internal lateral surface is complementary to the outer lateral surface 32 of the steel core 31, so that the two surfaces are in close contact. This characteristic is extremely important to the invention, for reasons which will be explained later.

The branches 35b of the injection duct 35 extend from the cup 37 through the aperture 38 and open into a cavity 41 formed between the lower portion of the nozzle 30 and the surface of the mould and closed at the top by the sealing rim 40.

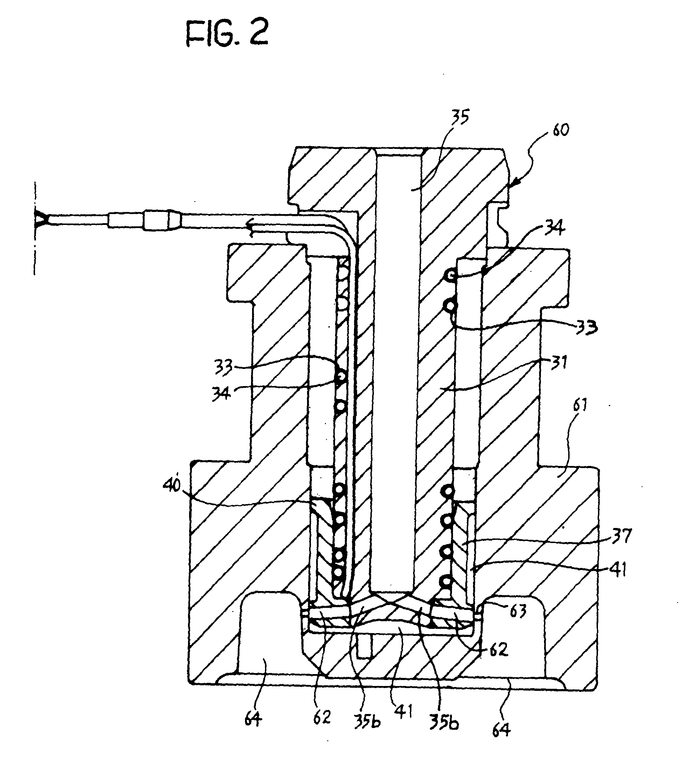

With reference now to Figure 2, an injection nozzle according to an alternative embodiment of the invention is generally indicated 60. In particular, the illustration shows a nozzle 61 for moulding plastics materials in multiple lateral jets. This nozzle differs from the previously described nozzle 30 essentially in that the cup 37 is differently shaped and in this case has substantially horizontal ducts 62 instead of the tip portions 36. These ducts 62 constitute continuations of the branches 35b of the injection duct 35 and are operable to convey the molten plastics material towards injection holes 63 in a moulding cavity 64 with lateral jets.

As can be seen from Figures 1, 2 and 3, unlike injection nozzles of the prior art, the resistor 31 is directly in contact with the lower portion of the steel core 35, near the tip portions 36 or the ducts 62. It follows that the resistor is able to heat both the molten plastics material in the lower portion of the injection duct 35 and the surfaces of the nozzle in contact with the flow of material more effectively. In addition, since the resistor 34 lies closely adjacent the cylindrical wall 39 of the cup 37 it is possible to heat the cavity 41 to a higher temperature than is usually achieved, thereby significantly improving injection conditions while consuming less energy.

A further advantage consists in the fact that the nozzle 30, 60 is made up of fewer components, essentially two, which are both made of steel, preferably HSS62 steel. This increases the nozzle's resistance to wear, reduces the number of contact surfaces which can be worn by the plastics material, improves heat conduction and makes it easier to replace parts, which in any case will require replacement less frequently.

The cup 37, which incorporates the tip portions 36, eliminates the need for high precision operations to manufacture the conventional, very small individual tips and the operations required to assemble them.

## Claims

1. An injection nozzle for moulding plastics materials which has:
- a cylindrical steel core (31),
- an injection duct (35),
- a steel body (37), which is a cup open at the bottom, with an internal surface which is congruent with the external lateral surface of the core (31) and surfaces (36, 62) which form end portions of the injection channel (35) near at least one injection duct (63);
**characterised in that**
- at least one seat (33) is formed in the outer lateral surface (32) of the steel core (31) for housing at least one resistor means (34) extending to a point close to the bottom end of the core (31), whereby said resistor means (34) are in contact with the steel body (37).

2. An injection nozzle according to Claim 1, in which the injection duct (35) is formed directly through the steel core (31).

3. An injection nozzle according to Claim 1, in which the steel body (37) has tip formations (36) at the bottom for injecting into a vertical multi-jet mould (50).

4. An injection nozzle according to Claim 1, in which the steel body (37) has radial ducts (62) at the bottom for injecting into a lateral multi-jet mould (61).

5. An injection nozzle according to Claim 1, in which the steel body (37) is securely fixed to the steel core (31) by radial interference.

6. An injection nozzle according to Claim 1, in which the said steel body (37) is made of HSS-type steel.

7. An injection nozzle according to Claim 1, in which the said steel core (31) is made of HSS type steel.

## Patentansprüche

1. Einspritzdüse zum Formen von Kunststoffmaterialien, welche Folgendes aufweist:
- einen zylindrischen Stahlkern (31),
- ein Einspritzrohr (35),
- einen Stahlkörper (37), der eine unten offene Schale darstellt, mit einer Innenseite, die mit der äußeren Seitenfläche des Kerns (31) deckungsgleich ist, und Flächen (36, 62), welche Endteile des Einspritzkanals (35) in der Nähe zumindest eines Einspritzrohrs (63) bilden,
**dadurch gekennzeichnet, dass** in der äußeren Seitenfläche (32) des Stahlkerns (31) zumindest eine Aufnahmefläche (33) gebildet ist, um zumindest ein Widerstandsmittel (34) unterzubringen, welches sich bis zu einem Punkt in der Nähe des unteren Endes des Kerns (31) erstreckt, wobei dieses Widerstandsmittel (34) mit dem Stahlkörper (37) in Kontakt steht.

2. Einspritzdüse gemäß Anspruch 1, wobei das Einspritzrohr (35) direkt durch den Stahlkem (31) gebildet ist.

3. Einspritzdüse gemäß Anspruch 1, wobei der Stahlkörper (37) unten Spitzenstrukturen (36) zum Einspritzen in eine vertikale Mehrstrahlform (50) aufweist.

4. Einspritzdüse gemäß Anspruch 1, wobei der Stahlkörper (37) unten Radialrohre (62) zum Einspritzen in eine laterale Mehrstrahlform (61) aufweist.

5. Einspritzdüse gemäß Anspruch 1, wobei der Stahlkörper (37) durch eine radiale Interferenz fest am Stahlkem (31) angebracht ist.

6. Einspritzdüse gemäß Anspruch 1, wobei der Stahlkörper (37) aus Stahl des HSS-Typs gefertigt ist.

7. Einspritzdüse gemäß Anspruch 1, wobei der Stahlkem (31) aus Stahl des HSS-Typs gefertigt ist.

## Revendications

1. Buse d'injection pour mouler des matériaux plastiques, qui comprend :
- une âme cylindrique (31) en acier,
- un conduit d'injection (35),
- un corps en acier (37), qui est une coupelle ouverte au niveau du fond, avec une surface interne qui coincide avec la surface latérale externe de l'âme (31) et des surfaces (36, 62) qui forment des parties d'extrémité du canal d'injection (35) au voisinage d'au moins un conduit d'injection (63) ;
**caractérisée en ce qu'**au moins un siège (33) est formé dans la surface externe latérale (32) de l'âme en acier (31) pour loger au moins un moyen résistif (34) s'étendant jusqu'à un point situé à proximité de l'extrémité de fond de l'âme (31), de sorte que ledit moyen résistif (34) est en contact avec le corps en acier (37).

2. Buse d'injection suivant la revendication 1, dans laquelle le conduit d'injection (35) est formé directement au travers de l'âme en acier (31).

3. Buse d'injection suivant la revendication 1, dans laquelle le corps en acier (37) est doté de becs (36) au niveau du fond aux fins d'injection dans un moule à jets multiples vertical (50).

4. Buse d'injection suivant la revendication 1, dans laquelle le corps en acier (37) présente des conduits radiaux (62) au niveau du fond aux fins d'injection dans un moule à jets multiples latéral (61).

5. Buse d'injection suivant la revendication 1, dans laquelle le corps en acier (37) est fixé en étant verrouillé à l'âme en acier (31) par interférence radiale.

6. Buse d'injection suivant la revendication 1, dans laquelle ledit corps' en acier (37) est réalisé en acier de type rapide.

7. Buse d'injection suivant la revendication 1, dans laquelle ladite âme en acier (31) est réalisée en acier de type rapide.
